# EUROPÄISCHE PATENTSCHRIFT

(11) **EP 2 190 909 B1**
(45) Veröffentlichungstag und Bekanntmachung des Hinweises auf die Patenterteilung: **25.05.2011**
(21) Anmeldenummer: 08785743.9
(22) Anmeldetag: 28.08.2008
(51) Int. Cl.: C08J 7/04, B65D 1/02

(54) **VERPACKUNGSTEIL UND VERFAHREN ZU SEINER HERSTELLUNG**
PACKAGING COMPONENT AND PROCESS FOR PRODUCING IT
ÉLÉMENT D'EMBALLAGE ET SON PROCÉDÉ DE FABRICATION

(30) Priorität: 03.09.2007 EP 07405266
(43) Veröffentlichungstag der Anmeldung: 02.06.2010
(73) Patentinhaber: Amcor Flexibles Kreuzlingen Ltd., 8280 Kreuzlingen (CH)
(72) Erfinder: DIPPEL, Markus, CH-8192 Glattfelden (CH); LOHWASSER, Wolfgang, 78626 Gailingen (DE); HOFFMANN, Manfred, 78224 Singen (DE); WISARD, André, CH-8194 Hüntwangen (CH)
(74) Vertreter: Burkhart, Hans
(86) Internationale Anmeldenummer: PCT/EP2008/007048
(87) Internationale Veröffentlichungsnummer: WO 2009/030425

(56) Entgegenhaltungen:
- EP-A- 0 792 846
- EP-A- 1 036 813
- EP-A- 1 199 158
- EP-A- 1 787 796
- WO-A-00/66653
- GB-A- 2 210 899
- US-A- 5 645 923
- US-A- 5 654 054
- US-A- 5 770 301
- US-A- 5 942 320
- US-A1- 2003 194 517
- US-A1- 2004 052 995
- US-A1- 2005 214 530
- DATABASE WPI Week 200634 Thomson Scientific, London, GB; AN 2006-324490 XP002475241 -& JP 2006 116731 A (DAINIPPON PRINTING CO LTD) 11. Mai 2006 (2006-05-11)
- DATABASE WPI Week 200322 Thomson Scientific, London, GB; AN 2003-224368 XP002475242 -& JP 2002 307600 A (DAINIPPON PRINTING CO LTD) 23. Oktober 2002 (2002-10-23)
- DATABASE WPI Week 200050 Thomson Scientific, London, GB; AN 2000-545620 XP002475243 -& JP 2000 167972 A (DAINIPPON PRINTING CO LTD) 20. Juni 2000 (2000-06-20)

## Beschreibung

Die Erfindung betrifft ein Verpackungstell nach dem Oberbegriff des Anspruchus 1.

Im Rahmen der Erfindung Ilegt auch ein zur Herstellung des Verpackungstells geeignetes Verfahren nach dem Oberbegriff des Anspruchs 7.

Schon lange werden Lebensmittel in Verpackungen aus Glas oder Aluminium verpackt. Beide Materialien bieten einen hundertprozentigen Schutz gegen den Durchtritt von Gasen und Wasserdampf. Dies bedeutet, dass keine Gase von aussen nach Innen die Wand der Verpackung durchdringen können, was das Lebensmittel vor dem Verderben schützt. Gleichzeitig können auch keine Gase von innen nach aussen gelangen, was das Produkt vor Aromaverlust und Austrocknung schützt.

Belde Verpackungen sind vom ökologischen Standpunkt her nicht optimal und bieten hinslchtlich der Gestaltung der Verpackungsform wenig Freiheltsgrade. Aluminium hat den Nachteil, dass hieraus keine transparenten Verpackungen hergestellt werden können, und Glasverpackungen haben - neben dem hohen Elgengewicht - den Nachteil, dass Immer mit Splittern oder Glasbruch gerechnet werden muss. Hier bieten Verpackungen aus Kunststoff deutliche Vortelle. Da Kunststoffe in der Regel selber nur eine unzureichende Gassperrwirkung aufweisen, müssen entsprechende Verpackungen mit einer zusätzlichen Sperrschicht versehen werden. Hierzu kennt man verschiedene Möglichkeiten:
Ein Beispiel Ist das Thermoformen mehrschichtiger Flachfollen, die im Inneren eine Sauerstoffsperrschicht, z.B. aus EVOH, enthalten. Mit dieser Technologie können transparente Barriereverpackungen realisiert werden. Allerdings haben diese Verpackungen den Nachteil, dass sie aufgrund des Thermoformvorganges in ihrer Gestaltungsfreiheit sehr eingeschränkt sind. Zudem ist bekannt, dass bei einem etwaigen Sterilisationsvorgang (der gefüllten Verpackung) die durch das EVOH vermittelte Gasbarriere zwischenzeitlich zusammenbricht, was während einer gewissen Zeitdauer den Zutritt von Sauerstoff durch die Wand der Verpackung in das Lebensmittel ermöglicht. Ganz analoge Einschränkungen gelten für "flaschenartige" Behälter mit EVOH-Sperrschichten, die durch eine Kombination von Spritzguss und Blasformen (injection blow molding) oder Extrusion und Blasformen (extrusion blow molding) erzeugt werden können.
   Eine weitere Realisierungsmöglichkeit sind Behälter mit integriertem "inmoldlabel", bei deren Herstellung eine Folie mit der gewünschten Barriere in eine Spritzgussform eingesetzt und anschliessend mit Kunststoff hinterspritzt wird. Auch hier ist aber die Formfreiheit der resultierenden Behälter durch den Herstellungsprozess sehr stark eingeschränkt.

In EP-B-1 048 746 ist ausserdem die Herstellung von Behältern mit Barrierewirkung mittels Vakuumbeschichtung beschrieben. Die Herstellung einer Barriereverpackung erfolgt dort durch Formen des Behälters (Spritzgiessen, Thermoformen, Blasformen) und anschliessendes Vakuumbeschichten mit einer Barriereschicht aus einem hierfür geeigneten Material. Die Verpackung wird mittels einer flexiblen Barrierefolie als Deckelfolie verschlossen.

Die so hergestellten Kunststoff-Barriereverpackungen sind noch nicht optimal hinsichtlich folgender Gesichtspunkte:
- Oftmals wird durch die reine Vakuumbeschichtung allein noch nicht die Barrierewirkung erreicht, die aufgrund der vom Kunden vorgegebenen Haltbarkeit des Lebensmittels benötigt wird.
- Die extrem dünne Vakuumbeschichtung ist anfälllg gegen mechanische Abrasion sowie Korrosion, was z.B. bei dem zum automatisierten Abfüllen notwendigen Handling zum Verlust der Barrierewirkung führen kann.
- Im Hinblick auf Sterilisationsanwendungen der Verpackung zeigen die meisten reinen Vakuumbeschichtungen nicht die erforderliche Stabilität.
- Durch Verwendung einer flexiblen Barrierefolie als Deckel-Siegelfolle kann die Verpackung nach dem erstmaligen Öffnen nicht oder nur ungenügend wiederverschlossen werden.

Ein Verpackungsteil und ein Verfahren der eingangs genannten Art sind aus US 2004/0052995 A1 bekannt.

Der Erfindung liegt deshalb die Aufgabe zugrunde, ein Verpackungstell und ein Verfahren der eingangs genannten Art so weiterzubilden, dass es die Verpackungsteilen wie Behältern und Verschlussdeckeln nach dem Stand der Technik anhaftenden Nachteile nicht aufweist.

Zur erfindungsgemässen Lösung der Aufgabe führt ein Verpackungsteil und ein Verfahren mit den Merkmalen des Anspruchs 1 bzw 7.

Das Formen des Verpackungsteils kann durch Thermoformen von Flachfolienmaterial, durch Spritzgiessen oder durch eine Kombination von Spritzguss und Blasformen (injection blowmolding) oder Extrusion und Blasformen (extrusion blowmolding) erfolgen.

Die Vakuumbeschichtung erfolgt durch

Ein Sterilgut-Verpackung aus einer Folie mit Barrieeigenschaften ist aus EP1199158bekannt.

Beschichten mittels Sputterverfahren, mit metallischen Schichten aus für Sterilisationsanwendungen geeignetein aus Silber, Stahl, Zinn oder Zink.

Die Überlackierung des vakuumbeschichteten Verpackungstells erfolgt beispielsweise durch Tauchlackleren, Flutlackieren, Glesslackieren, Spritzlackieren, Tampondruck oder mittels inkjet. Zur Verringerung der aufgebrachten Lackdicke bzw. zur besseren Verteilung des Lackes auf dem Verpackungsteil kann dem Lackiervorgang ein Abschleudervorgang nachfolgen.

Lacke, welche zusätzlich zur Sauerstoffbarriere auch sterilisationsbeständige Eigenschaften aufweisen, sind kationisch UV-härtende Lacke oder Sol-Gel-Lacke auf Basis von Alkoxysilanen und/oder Metallalkoxiden und/oder anorganischen Partikeln. Diese Lacke können mit verschiedenen Vernetzerharzen, wie z. B. Isocyanaten, Melamin- oder Harnstoffharzen, Silanen oder Metallalkoxiden vernetzt werden.

Die UV-härtenden Lacke sind auf Basis von kationisch vernetzenden Epoxiden. Die Aushärtung erfolgt durch Strahlenhärtung. Besonders bevorzugt ist die Härtung durch UV-Licht oder Elektronenstrahlen.

Verpackungsteile können beispielsweise In Form eines Behälters zur Aufnahme eines Füllgutes und/oder eines Verschlusses für einen Behälter vorllegen.

Das Beschichten und Überlackieren des Behälters und gegebenenfalls des Verschlusses kann auf der Innen- oder Aussenseite durchgeführt werden. Die aussenseltige Beschichtung ermöglicht beispielsweise das Aufbringen der Barriereschicht und der Überlackschicht auf die bereits gefüllte und verschlossene Packung.

Eine erfindungsgemäss hergestellte Barrierevorpackung mit einem Behälter zur Aufnahme eines Füllgut kann beispielsweise wie folgt verschlossen werden:
- mittels einer flexiblen Folie mit Sperrwirkung, die auf den Behälter gesiegelt wird, oder
- mit einem Stülp-, Schnapp- oder Kiappdeckei oder mit einem Schraubverschluss, der aus Metall oder Kunststoff bestehen kann. Für den Fall, dass der Schraubverschluss aus Kunststoff besteht und damit eine ungenügende Barrierewirkung aufweist, kann er, wie vorgehend beschrieben, durch eine Kombination aus Vakuumbeschichtung und Überlackierung mit einer entsprechenden Gasbarriere versehen werden.

Erfindungsgemässe Verpackungsteile können auch Verschlüsse von Verpackungen aus Glas, Karton oder anderen Materialien sein, wie z. B. Deckel für Glasflaschen, Schraubdeckel für Getränkekartons etc.

Das erfindungsgemässe Verfahren ermöglicht die Herstellung von Verpackungsteilen aus einer grossen Anzahl von Ausgangsmaterialien. Zweckmässig sind vor allem transparente Kunststoffe mit guten Umformeigenschaften wie Polyethylen (PE), Polypropylen (PP), Cycloolefincopolymer (COC), Cycloolefinpolymer (COP), Polyvinylchlorid (PVC), Polyethylenterephthalat (PET), Polyamid (PA) sowie aus den genannten Werkstoffen hergestellte Laminate.

Kompostierbare und biologisch abbaubare Polymere und/oder auf erneuerbaren Rohstoffen basierende Polymere können ebenfalls als Ausgangsmaterial zur Herstellung von Verpackungsteilen eingesetzt werden.

Geeignete kompostierbare Polymere sind insbesondere gemäss EN 13432 zertifizierte und auf erneuerbaren und oder nicht erneuerbaren Rohstoffen basierende Polymere, wie auf Stärke basierende Polymere (stark blends), PLA (Polylactid), Polyester des Typs PHA (Polyhydroxyalcanoat), z.B. PHB (Polyhydroxybutyrat), PHV (Polyhydroxyvaleat), Cellulosematerialien aus chemisch modifizierter Cellulose, weitere, aus chemisch modifizierter Cellulose hergestellte Materialien, sowie spezifische, aus Rohöl oder natürlichem Gas hergestellte synthetische Polyester.

Auf erneuerbaren Rohstoffen basierende Polymere werden z.B. aus Zucker, Stärke, pflanzlichen Ölen oder aus Cellulose hergestellt. Getreide, Kartoffeln, Cerealien, Zuckerrohr und Holz sind die am häufigsten eingesetzten Ausgangsmaterialien.

Geeignete, auf erneuerbaren Rohstoffen basierende Polymere sind insbesondere spezifische Polyester, z.B. auf PDO (Bio-Propandiol) basierend, spezifische Polyamide, z.B. aus Rizinusöl hergestellt, sowie PE (Polyethylen), Polypropylen (PP) und PVC (Polyvinylchlorid), auf Bio-Ethanol aus z.B. Zuckerrohr basierend.

Die erfindungsgemässe Vakuumbeschichtung mit Überlackierung ermöglicht die Herstellung von Verpackungsteilen aus erneuerbaren Rohstoffen mit hoher Barrierewirkung und einer zertifizierten Kompostierbarkeit gemäss den Kriterien der Norm EN 13432.

Wenn eine Widerstandsfähigkeit gegenüber Sterilisierbedingungen gefordert wird, werden bevorzugt Biopolymere wie PHA oder auf erneuerbaren Rohstoffen basierendes Polypropylen eingesetzt.

Bei einer besonders bevorzugten Ausgestaltung des erfindungsgemässen Verfahrens werden die Herstellung der Verpackungsteile, das Beschichten und das Überlackieren in einer Linie durchgeführt.

Aus den nachstehenden Tabellen ist der Einfluss der Barriereschicht und verschiedener Überlacksysteme auf die Sauerstoffbarriere von Verpackungsteilen vor und nach einer Sterilisationsbehandlung ersichtlicht.

Tabelle 1 zeigt die Barrierewirkung von Verpackungsteilen aus Polypropylen (PP) unbeschichtet und beschichtet mit Silber (Ag), Stahl (V2A) und Zinn (Sn), ohne Überlackschicht.

Tabelle 2 zeigt die Barrierewirkung von Verpackungsteilen aus Polypropylen (PP) beschichtet mit Silber (Ag) und Stahl (V2A), mit einer Überlackschicht aus unterschiedlichen Lacksystemen.

Tabelle 3 zeigt die Barrierewirkung von Verpackungsteilen aus Polylactid (PLA) beschichtet mit Silber (Ag) und Stahl (V2A), ohne Überlackschicht.

**Tabelle 1: Sauerstoffbarriere bei 25°C und 50% rH in cm³/(m² 24h bar), Einfluss der anorganischen Barriereschicht**

| **Verpackungsmaterial** | **vor Sterilisation** | **nach Sterilisation bei 121°C / 30 min** |
|---|---|---|
| PP unbeschichtet | 500 | 500 |
| PP / Ag | 15 | 75 |
| PP / V2A | 30 | 370 |
| PP / Sn | 36 | 350 |

**Tabelle 2: Sauerstoffbarriere bei 25°C und 50% rH in cm³/(m² 24h bar), Einfluss der zusätzlichen Überlackierung**

| **Verpackungsmaterial** | **vor Sterilisation** | **nach Sterilisation bei 121°C / 30 min** |
|---|---|---|
| PP / Ag / Lack 1 | 0.5 | 0.98 |
| PP / Ag / Lack 2 | 9.4 | 28 |
| PP / Ag / Lack 3 | 1.1 | 2.3 |
| PP / V2A / Lack 1 | 0.4 | 6.2 |
| PP / V2A / Lack 2 | 31 | 210 |
| PP / V2A / Lack 3 | 3.1 | 6.4 |

| | | |
|---|---|---|
| Lack 1 = 100% UV-System (lösemittelfrei), kationisch härtend Lack 2 = 100% UV-system (lösemittelfrei), radikalisch härtend Lack 3 = thermisch härtendes (lösemittelhaltiges) Sol-Gel-System | | |

**Tabelle 3: Sauerstoffbarriere bei 25°C und 50% rH in cm³/(m² 24h bar), Einfluss der anorganischen Barriereschicht**

| **Verpackungsmaterial** | |
|---|---|
| PLA(1 mm) unbeschichtet | 14.5 |
| PLA(1 mm) / Ag | 1.9 |

## Patentansprüche

1. Verpackungstell aus durch Thermoformen von Flachfollenmaterial, durch Spritzglessen oder durch eine Kombination von Spritzguss und Blasformen (injection blowmolding) oder Extrusion und Blasformen (extrusion blowmolding) geformtem Kunststoff, mit einer im Vakuum mittels Sputterverfahren erzeugten metallischen Schicht als Barriereschicht mit guter Durchtrittssperrwirkung gegen Wasserdampf und Gase, wobei die metallische Schicht überlackiert ist,
**dadurch gekennzeichnet, dass**
die metallische Schicht aus Silber, Stahl, Zinn oder Zink besteht und zum Schutz gegen Abrasion und Korrosion und zur Verbesserung der mechanischen Stabilität mit einem Sol-Gel-Lack auf Basis von Alkoxysilanen und/oder Metallalkoxiden und/oder anorganischen Partikein oder mit einem UV-härtenden Lack auf Basis von kationisch vemetzenden Epoxiden überlackiert Ist.

2. Verpackungsteil nach Anspruch 1, **dadurch gekennzeichnet, dass** die Dicke der Überlackschicht 1 bis 30 µm, vorzugsweise 1 bis 5 µm, beträgt.

3. Verpackungsteil nach Anspruch 1 oder 2, **dadurch gekennzeichnet, dass** das Verpackungsteil aus Polyethylen (PE), Polypropylen (PP), Cycloolefincopolymer (COC), Cycloolefinpolymer (COP), Polyvlnylchlorid (PVC), Polyethylenterephthalat (PET), Polyamid (PA) oder aus den genannten Werkstoffen hergesteliten Laminaten geformt ist.

4. Verpackungsteil nach Anspruch 1 oder 2, **dadurch gekennzeichnet, dass** das Verpackungsteil aus kompostierbaren Polymeren, insbesondere auf erneuerbaren Rohstoffen basierenden Polymeren, wie auf Stärke basierende Polymere (stark blends), PLA (Polylactid), Polyester des Typs PHA (Polyhydroxyalcanoat), z.B. PHB (Polyhydroxybutyrat), PHV (Polyhydroxyvaleat), Cellulosematerialien aus chemisch modifizierter Cellulose, weitere, aus chemisch modifizierter Cellulose hergestellte Materialien, auf emeuerbaren Rohstoffen basierende Polymere sind insbesondere spezifische Polyester, z.B. auf PDO (Bio-Propandiol) basierend, spezifische Polyamide, z.B. aus Rizinusöl hergestellt, sowie PE (Polyethylen), Polypropylen (PP) und PVC (Polyvinylchlorid), auf Bio-Ethanol aus z.B. Zuckerrohr basierend, sowie spezifische, aus Rohöl oder natürlichem Gas hergestellte synthetische Polyester, oder aus den genannten Werkstoffen hergestellten Laminaten geformt ist.

5. Verpackungstell nach einem der Ansprüche 1 bis 4, **dadurch gekennzeichnet, dass** der Sol-Gel-Lack mit Vemetzerharzen, insbesondere Isocyanaten, Melamin- oder Harnstoffharzen, Silanen oder Metallalkoxiden, vernetzt Ist.

6. Verpackungsteil nach einem der Ansprüche 1 bis 5 in der Form eines Behälters zur Aufnahme eines Füllgutes und/oder eines Verschlusses für einen Behälter.

7. Verfahren zur Herstellung eines Verpackungsteils mit guter Durchtrittssperrwirkung gegen Wasserdampf und Gase, wobei das Verpackungstell aus einem Kunststoff durch Thermoformen von Flachfollenmaterial, durch Spritzgiessen oder durch eine Kombination von Spritzguss und Blasformen (Injection blowmolding) oder Extrusion und Blasformen (extrusion blowmolding) geformt wird und die Durchtrittssperrwirkung gegen Wasserdampf und Gase nach dem Formen des Verpackungstells In Form einer metallischen Schicht Im Vakuum mittels Sputterverfahren erzeugt und die metallische Schicht überlackiert wird,
**dadurch gekennzeichnet, dass**
die metallische Schicht aus Silber, Stahl, Zinn oder Zink besteht und zum Schutz gegen Abrasion und Korrosion und zur Verbesserung der mechanischen Stabilität mit einem Sol-Gel-Lack auf Basis von Alkoxysilanen und/oder Metallalkoxiden und/oder anorganischen Partikeln oder mit einem UV-härtenden Lack auf Basis von kationisch vernetzenden Epoxiden überlackiert wird.

8. Verfahren nach Anspruch 7, **dadurch gekennzeichnet, dass** der Behälter und gegebenenfalls der Verschluss aus Polyethylen (PE), Polypropylen (PP), Cycloolefincopolymer (COC), Cycloolefinpolymer (COP), Polyvinylchlorid (PVC), Polyethylenterephthalat (PET), Polyamid (PA) oder aus den genannten Werkstoffen hergestellten Laminaten geformt werden.

9. Verfahren nach Anspruch 7, **dadurch gekennzeichnet, dass** der Behälter und gegebenenfalls der Verschluss aus kompostlerbaren Polymeren, Insbesondere auf erneuerbaren Rohstoffen basierenden Polymeren, wie auf Stärke basierende Polymere (stark blends), PLA (Polylactid), Polyester des Typs PHA (Polyhydroxyalcanoat), z.B. PHB (Polyhydroxybutyrat), PHV (Polyhydroxyvaleat), Cellulosematerialien aus chemisch modifizierter Cellulose, weitere, aus chemisch modifizierter Cellulose hergestellte Materialien, auf erneuerbaren Rohstoffen basierende Polymere sind insbesondere spezifische Polyester, z.B. auf PDO (Bio-Propandiol) basierend, spezifische Polyamide, z.B. aus Rizinusöl hergestellt, sowie PE (Polyethylen), Polypropylen (PP) und PVC (Polyvinylchlorid), auf Bio-Ethanol aus z.B. Zuckerrohr basierend, sowie spezifische, aus Rohöl oder natürlichem Gas hergestellte synthetische Polyester, oder aus den genannten Werkstoffen hergestellten Laminaten geformt werden.

10. Verfahren nach einem der Ansprüche 7 bis 9, **dadurch gekennzeichnet, dass** der Sol-Gel-Lack mit Vernetzerharzen, insbesondere Isocyanaten, Melamin- oder Harnstoffharzen, Silanen oder Metallalkoxiden, vernetzt wird.

11. Verfahren nach einem der Ansprüche 7 bis 10, **dadurch gekennzeichnet, dass** das Verpackungstell ein Behälter zur Aufnahme eines Füllgutes und/oder ein Verschlusses für einen Behälter ist.

12. Verfahren nach einem der Ansprüche 7 bis 11, **dadurch gekennzeichnet, dass** die Herstellung des Verpackungsteils, das Beschichten und das Überlackieren in einer Linie durchgeführt werden.

## Claims

1. Packaging part of plastics material moulded by thermoforming flat film material, by injection moulding or by a combination of injection moulding and blow moulding (injection blow moulding) or extrusion and blow moulding (extrusion blow moulding), having a metal layer, produced in a vacuum by a sputtering method, as a barrier layer with a good barrier effect against the passage of water vapour and gases, the metal layer being over-painted, **characterised in that** the metal layer is made of silver, steel, tin or zinc and for protection against abrasion and corrosion and to improve the mechanical stability is over-painted with a sol-gel paint based on alkoxy silanes and/or metal alkoxides and/or inorganic particles or with a UV-hardening paint based on cationic crosslinking epoxides.

2. Packaging part according to claim 1, **characterised in that** the thickness of the over-paint layer is 1 to 30 µm, preferably 1 to 5 µm.

3. Packaging part according to claim 1 or 2, **characterised in that** the packaging part is formed from polyethylene (PE), polypropylene (PP), cycloolefin copolymer (COC), cycloolefin polymer (COP), polyvinylchloride (PVC), polyethylene terephthalate (PET), polyamide (PA) or a laminate made from said materials.

4. Packaging part according to claim 1 or 2, **characterised in that** the packaging part is made from compostable polymers, in particular polymers based on renewable raw materials such as polymers based on starches (starch blends), PLA (polylactide), polyester of type PHA (polyhydroxyalcanoate), for example PHB (polyhydroxybutyrate), PHV (polyhydroxyvaleate), cellulose materials of chemically modified cellulose, further materials made from chemically modified cellulose, polymers based on renewable raw materials are in particular specific polyesters, for example, based on PDO (bio-propandiol), specific polyamides, for example made from ricin oil, and PE (polyethylene), polypropylene (PP) and PVC (polyvinylchloride), based on bio-ethanol for example from sugar cane, and specific synthetic polyesters made from crude oil or natural gas, or laminates made from said materials.

5. Packaging part according to any one of claims 1 to 4, **characterised in that** the sol-gel paint is crosslinked with crosslinking resins, in particular isocyanates, melamine or urea resins, silanes or metal alkoxides.

6. Packaging part according to any one of claims 1 to 5, in the form of a container for holding a filling and/or a lid for a container.

7. Method for producing a packaging part with a good barrier effect against the passage of water vapour and gasses, the packaging part being formed from a plastics material by thermoforming flat film material, by injection moulding or by a combination of injection moulding and blow moulding (injection blow moulding) or extrusion and blow moulding (extrusion blow moulding), and after forming the packaging part, the barrier effect against the passage of water vapour and gases being produced in a vacuum by a sputtering method in the form of a metal layer and the metal layer being over-painted, **characterised in that** the metal layer is made of silver, steel, tin or zinc and for protection against abrasion and corrosion and to improve the mechanical stability is over-painted with a sol-gel paint based on alkoxy silanes and/or metal alkoxides and/or inorganic particles or with a UV-hardening paint based on cationic crosslinking epoxides.

8. Method according to claim 7, **characterised in that** the container and optionally the lid are formed from polyethylene (PE), polypropylene (PP), cycloolefin copolymer (COC), cycloolefin polymer (COP), polyvinylchloride (PVC), polyethylene terephthalate (PET), polyamide (PA) or a laminate made from said materials.

9. Method according to claim 7, **characterised in that** the container and optionally the lid are formed from compostable polymers, in particular polymers based on renewable raw materials such as polymers based on starches (starch blends), PLA (polylactide), polyester of the PHA type (polyhydroxyalcanoate), for example PHB (polyhydroxybutyrate), PHV (polyhydroxyvaleate), cellulose materials of chemically modified cellulose, further materials made from chemically modified cellulose, polymers based on renewable raw materials are in particular specific polyesters, for example, based on PDO (bio-propandiol), specific polyamides, for example made from ricin oil, and PE (polyethylene), polypropylene (PP) and PVC (polyvinylchloride), based on bio-ethanol for example from sugar cane, and specific synthetic polyesters made from crude oil or natural gas, or laminates made from said materials.

10. Method according to any one of claims 7 to 9, **characterised in that** the sol-gel paint is crosslinked with crosslinking resins, in particular isocyanates, melamine or urea resins, silanes or metal alkoxides.

11. Method according to any one of claims 7 to 10, **characterised in that** the packaging part is a container for holding a filling and/or a lid for a container.

12. Method according to any one of claims 7 to 11, **characterised in that** the production of the packaging part, coating and over-painting take place in sequence.

## Revendications

1. Partie d'emballage constituée d'une matière synthétique formée par thermoformage d'un matériau de feuille plane, par moulage par injection ou par une combinaison de moulage par injection et de soufflage (injection blowmolding) ou d'extrusion et de soufflage (extrusion blowmolding), avec une couche métallique produite sous vide au moyen d'un procédé de pulvérisation cationique comme couche barrière avec une bonne action de barrière au passage de vapeur d'eau et de gaz, dans laquelle la couche métallique est vernie en surface,
**caractérisée en ce que**
la couche métallique est constituée d'argent, d'acier, d'étain ou de zinc et est vernie en surface avec une laque sol-gel à base d'alcoxysilanes et/ou d'alcoxydes métalliques et/ou de particules inorganiques ou avec une laque durcissant aux UV à base d'époxydes réticulant de manière cationique pour une protection contre l'abrasion et la corrosion et pour une amélioration de la stabilité mécanique,.

2. Partie d'emballage selon la revendication 1, **caractérisée en ce que** l'épaisseur de la couche de vernis de surface est de 1 à 30 µm, de préférence de 1 à 5 µm.

3. Partie d'emballage selon la revendication 1 ou 2, **caractérisée en ce que** la partie d'emballage est formée à partir de polyéthylène (PE), de polypropylène (PP), d'un copolymère de cyclooléfine (COC), d'un polymère de cyclooléfine (COP), de poly(chlorure de vinyle) (PVC), de poly(éthylène téréphtalate) (PET), de polyamide (PA) ou de stratifiés préparés à partir des matières premières citées.

4. Partie d'emballage selon la revendication 1 ou 2, **caractérisée en ce que** la partie d'emballage est formée à partir de polymères compostables, en particulier de polymères à base de matières premières renouvelables, comme de polymères à base d'amidon (stark blends), de PLA (polylactide), de polyester du type PHA (polyhydroxyalcanoate), par exemple PHB (polyhydroxybutyrate), PHV (polyhydroxyvalérate), de matières de cellulose constituées de cellulose chimiquement modifiée, d'autres matières préparées à partir de cellulose chimiquement modifiée, de polymères à base de matières premières renouvelables qui sont en particulier des polyesters spécifiques, par exemple des polyamides spécifiques à base de PDO (bio-propanediol) préparés par exemple à partir d'huile de ricin, ainsi que de PE (polyéthylène), de polypropylène (PP) et de PVC (poly(chlorure de vinyle)), à base de bioéthanol provenant par exemple de canne à sucre ainsi que de polyesters spécifiques synthétiques préparés à partir de pétrole brut ou de gaz naturel ou de stratifiés constitués des matières premières citées.

5. Partie d'emballage selon l'une quelconque des revendications 1 à 4, **caractérisée en ce que** la laque sol-gel est réticulée avec des résines de réticulation, en particulier des isocyanates, des résines de mélanine ou d'urée, des silanes ou des alcoxydes métalliques.

6. Partie d'emballage selon l'une quelconque des revendications 1 à 5 dans la forme d'un récipient pour contenir une marchandise et/ou une fermeture pour un récipient.

7. Procédé pour la préparation d'une partie d'emballage avec une bonne action de barrière au passage de vapeur d'eau et de gaz, dans lequel la partie d'emballage est formée à partir d'une matière synthétique par thermoformage d'un matériau de feuille plane, par moulage par injection ou par une combinaison de moulage par injection et de soufflage (injection blowmolding) ou d'extrusion et de soufflage (extrusion blowmolding) et l'action de barrière au passage de vapeur d'eau et de gaz est produite après la formation de la partie d'emballage dans la forme d'une couche métallique sous vide à l'aide d'un procédé de pulvérisation cationique et la couche métallique est vernie en surface,
**caractérisé en ce que**
la couche métallique est constituée d'argent, d'acier, d'étain ou de zinc et est vernie en surface avec une laque sol-gel à base d'alcoxysilanes et/ou d'alcoxydes métalliques et/ou de particules inorganiques ou avec une laque durcissant aux UV à base d'époxydes réticulant de manière cationique pour une protection contre l'abrasion et la corrosion et pour une amélioration de la stabilité mécanique.

8. Procédé selon la revendication 7, **caractérisé en ce que** le récipient et éventuellement la fermeture sont formés à partir de polyéthylène (PE), de polypropylène (PP), d'un copolymère de cyclooléfine (COC), d'un polymère de cyclooléfine (COP), de poly(chlorure de vinyle) (PVC), de poly(éthylène téréphtalate) (PET), de polyamide (PA) ou de stratifiés préparés à partir des matières premières citées.

9. Procédé selon la revendication 7, **caractérisé en ce que** le récipient et éventuellement la fermeture sont formés à partir de polymères compostables, en particulier de polymères à base de matières premières renouvelables, comme de polymères à base d'amidon (stark blends), de PLA (polylactide), de polyester du type PHA (polyhydroxyalcanoate), par exemple PHB (polyhydroxybutyrate), PHV (polyhydroxyvalérate), de matières de cellulose constituées de cellulose chimiquement modifiée, d'autres matières préparées à partir de cellulose chimiquement modifiée, des polymères à base de matières premières renouvelables qui sont en particulier des polyesters spécifiques, par exemple des polyamides spécifiques à base de PDO (bio-propanediol) préparés par exemple à partir d'huile de ricin, ainsi que de PE (polyéthylène), de polypropylène (PP) et de PVC (poly(chlorure de vinyle)), à base de bioéthanol provenant par exemple de canne à sucre ainsi que de polyesters spécifiques synthétiques préparés à partir de pétrole brut ou de gaz naturel ou de stratifiés constitués des matières premières citées.

10. Procédé selon l'une quelconque des revendications 7 à 9, **caractérisé en ce que** la laque sol-gel est réticulée avec des résines de réticulation, en particulier des isocyanates, des résines de mélamine ou d'urée, des silanes ou des alcoxydes métalliques.

11. Procédé selon l'une quelconque des revendications 7 à 10, **caractérisé en ce que** la partie d'emballage est un récipient pour contenir une marchandise et/ou une fermeture pour un récipient.

12. Procédé selon l'une quelconque des revendications 7 à 11, **caractérisé en ce que** la préparation de la partie d'emballage, le revêtement et le vernissage en surface sont réalisés sur une ligne.
